# EUROPÄISCHE PATENTSCHRIFT

(11) **EP 1 568 929 B1**
(45) Veröffentlichungstag und Bekanntmachung des Hinweises auf die Patenterteilung: **24.01.2007**
(21) Anmeldenummer: 05002886.9
(22) Anmeldetag: 11.02.2005
(51) Int. Cl.: F16L 19/02

(54) **Rohrkupplung zur Schraubverbindung zweiter Rohre**
Threaded pipe coupling
Raccord fileté pour tuyau

(30) Priorität: 25.02.2004 DE 102004009736
(43) Veröffentlichungstag der Anmeldung: 31.08.2005
(73) Patentinhaber: KHS AG, 44143 Dortmund (DE)
(72) Erfinder: Topf, Roland, Dipl.-Ing., 22177 Hamburg (DE); Bestmann, Matthias, 22457 Hamburg (DE); Fried, Peter, 21635 Jork (DE)

(56) Entgegenhaltungen:
- DE-U1- 9 213 767
- FR-A- 2 654 796
- US-A1- 2002 175 519
- US-A1- 2003 025 330

## Beschreibung

Die Erfindung betrifft eine Rohrkupplung der im Oberbegriff des Anspruch 1 genannten Art.

Gattungsgemäße Rohrkupplungen dienen der abgedichteten Verbindung zweier Rohre. Sie müssen diese mechanisch fest und abgedichtet gegen das Austreten von in den Rohren transportierten flüssigen oder gasförmigen Medium verbinden. Die gattungsgemäße Ausbildung mit einer Schraubverbindung mit Überwurfmutter ist für diese Zwecke bewährt und seit langem bekannt.

Die DE 31 26 755 C2 und ebenso die DE 75 23 597 U zeigen gattungsgemäße Rohrkupplungen, bei denen auf spaltfreie Anordnung der inneren Ringdichtung Wert gelegt wird, um an diesen verbleibende Flüssigkeitsrückstände zu vermeiden. Dadurch sollte eine bessere Innenreinigbarkeit, insbesondere beim Einsatz im pharmazeutischen Bereich oder im Lebensmittelbereich, sichergestellt werden.

Die DE 44 24 162 A1 zeigt eine gattungsgemäße Rohrkupplung mit Überwurfmutter, bei der die Rohrkupplung die üblichen Anforderungen hinsichtlich mechanischer Festigkeit und flüssigkeitsdichter Verbindung erfüllen soll, jedoch zusätzlich eine elektrische Isolierung zwischen den beiden zu verbindenden Rohren gewährleisten soll. Dazu ist der Innenflansch der Überwurfmutter auf dem ersten Rohr mit einem Isolierring gelagert.

Ebenfalls bekannt ist eine Vorrichtung nach der FR-A-26554796, die als nächstliegender Stand der Technik für Anspruch 1 angesehen wird. Diese Schrift stellt eine Vorrichtung vor, bei welcher zwei Rohrflansche mittels einer Überwurfmutter verbunden werden, wobei die Rohrflansche Dichtungen aufweisen, welche gegen die Überwurfmutter abdichtend wirken. Im Montagezustand weist diese Vorrichtung großvolumige Spalten auf, welche die Ansammlung von Schmutz und damit die Verkeimung der Flanschverbindung fördern.

Bei den bekannten Rohrkupplungen wird zwar auf innere Reinigbarkeit, nicht jedoch auf äußere Reinigbarkeit geachtet. Insbesondere die beiden Ringspalte an den Enden der Überwurfmutter, die dort zwischen der Überwurfmutter und dem jeweiligen Rohr vorhanden sind, können Schmutz aufnehmen und somit z. B. als Brutstätte für Keime und Bakterien dienen. Daher sind die bekannten gattungsgemäßen Rohrkupplungen nicht zur Anordnung in einer Reinraumumgebung geeignet, insbesondere nicht zur Anordnung in einem Sterilraum, in dem Getränke unter sterilen Bedingungen in Behälter gefüllt werden.

Die Aufgabe der vorliegenden Erfindung besteht darin, eine gattungsgemäße Rohrkupplung zum Einsatz in steriler Umgebung geeignet auszubilden.

Diese Aufgabe wird mit dem Merkmal des Anspruches 1 gelöst.

Erfindungsgemäß sind die beiden Ringspalte an den Enden der Überwurfmuttern mit Ringdichtungen versehen, die diese Spalte zumindest am äußeren Ende ausfüllen und das Eindringen von Schmutz verhindern. Dadurch wird insbesondere auch das Eindringen und die Ansiedlung von Keimen verhindert. Durch die spaltfreie Ausbildung der Rohrkupplung wird die Reinigung erleichtert und die Ansammlung von Schmutz, insbesondere Keimen, verhindert, so daß diese Konstruktion hervorragend zum Einsatz in Rein- bzw. Sterilräumen geeignet ist.

Vorteilhafte Ausgestaltungen der Erfindung ergeben sich aus den Unteransprüchen.

In der Zeichnung ist die Erfindung beispielsweise dargestellt. Es zeigen:
- Fig. 1: eine Achsansicht einer Rohrkupplung und
- Fig. 2: einen Schnitt nach Linie 2-2 in Fig. 1.

Die dargestellte Rohrkupplung 1 verbindet ein erstes Rohr 2 mit einem zweiten Rohr 3. An der Stoßstelle 4 zwischen den Rohren 2 und 3 ist in entsprechenden Halbnuten eine innere Ringdichtung 5 angeordnet, die die Abdichtung zwischen den Rohren besorgt.

Das erste Rohr 2 und das zweite Rohr 3 sind jeweils als Rohrstutzen dargestellt. Sie können mit weiterführenden Rohren verschweißt werden oder in größerer Länge ausgebildet sein.

Die Rohrkupplung 1 weist eine Überwurfmutter 6 aus, die an ihrem über dem ersten Rohr 2 gelegenen Ende einen Innenflansch 7 aufweist, mit dem sie über das erste Rohr 2 verschiebbar auf diesem gelagert ist. Die Überwurfmutter 6 weist ein Innengewinde auf und ist mit diesem auf einem Außengewinde 8 des zweiten Rohres 3 verschraubbar.

Beim Aufschrauben der Mutter 6 auf das Außengewinde 8 legt sich ihr Innenflansch 7 in axialem Anschlag gegen einen Außenflansch 9 des ersten Rohres 2, so daß die beiden Rohre an der Stoßstelle 4 in sichere Anlage gepreßt werden.

Insoweit liegt die eingangs erwähnte bekannte Konstruktionsweise vor. An beiden Enden der Überwurfmutter 6 besteht ein Spalt, und zwar zum einen zwischen dem inneren Rand des Innenflansches 7 und der Außenseite des ersten Rohres 2 und zum anderen zwischen der Innenwand der Mutter 6 jenseits der Gewindeverschraubung 8 und der Außenseite des zweiten Rohres 3. Diese Spalte sind schwer zu reinigen und können sich mit Schmutz oder Keimen zusetzen.

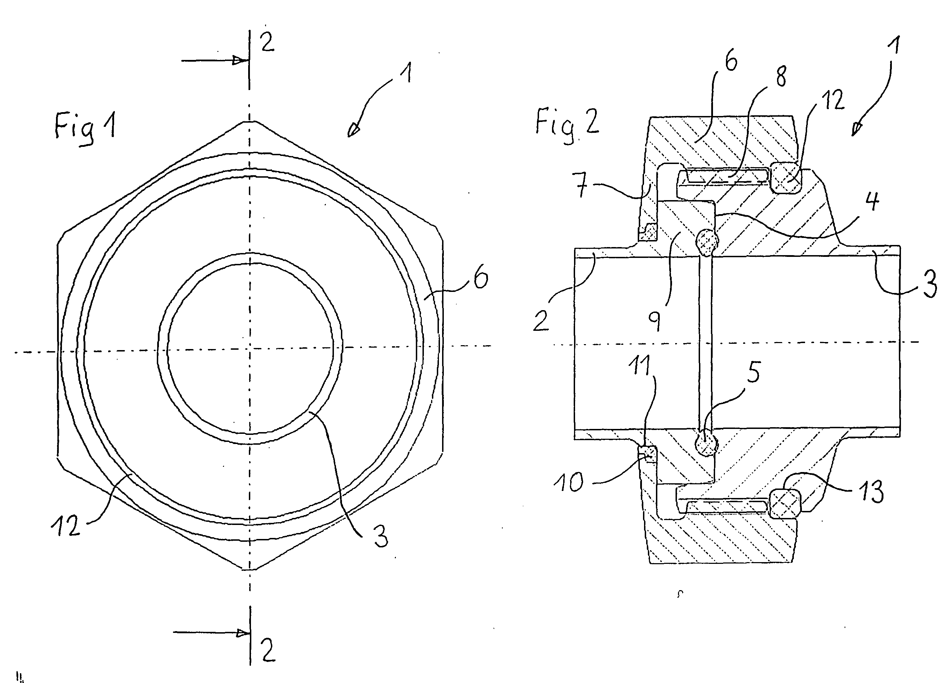

Um dies zu verhindern sind, wie aus Fig. 2 ersichtlich, diese Spalte ausgefüllt.

In dem Spalt zwischen dem Innenflansch 7 und dem ersten Rohr 2 ist im dargestellten Ausführungsbeispiel eine erste äußere Ringdichtung 10 angeordnet, die in einer Halbnut 11 des ersten Rohres 2 sichere Anlage in axialer Richtung findet und derart ausgebildet ist, daß sie den äußeren Rand des Spaltes zwischen dem Innenflansch 7 und der Oberfläche des ersten Rohres 2 zumindest im wesentlichen bündig verschließt, z. B. so wie in Fig. 2 dargestellt.

Am anderen Ende der Überwurfmutter 6 ist der Spalt zwischen dieser und dem zweiten Rohr 3 im dargestellten Ausführungsbeispiel mit einer zweiten äußeren Ringdichtung 12 verschlossen, die in einer Nut 13 des zweiten Rohres 3 axial sicher gelagert ist und ebenfalls so ausgebildet ist, daß sie den Spalt an seinem äußeren Ende zumindest im wesentlichen bündig schließt. Die zweitere äußere Ringdichtung 12 liegt dabei außerhalb der Gewindeverschraubung 8, so daß sie nicht vom Innengewinde der Überwurfmutter 6 verletzt wird.

Ersichtlich ergibt sich bei dieser Ausbildung eine außen völlig glatte, spaltfreie Rohrkupplung 1, die gut abwaschbar ist und nirgends Spalten zum Ansammeln von Schmutz oder Keimen aufweist.

Im dargestellten Ausfiihrungsbeispiel sind die Ringdichtungen 10, 12 einteilig ausgebildet. Sie können auch zweiteilig ausgebildet sein. Z.B. kann die Ringdichtung 12 aus zwei ringförmigen Teilen bestehen, wovon der eine an der Überwurfmutter 6 und der andere am zweiten Rohr 3 gelagert ist. Die beiden Teile können im verschraubten Zustand der Rohrkupplung dichtend aneinander liegen, um dann z. B. den Dichtungsquerschnitt zu bilden, der in Fig. 2 von der Ringdichtung 12 ausgebildet wird.

In Fig. 2 ist eine Konstruktion dargestellt, bei der an dem beiden Enden der Überwurfmutter 6 nur je eine Ringdichtung 10 bzw. 12 dargestellt ist. Es können jedoch an einem Ende der Überwurfmutter 6 auch mehrere Ringdichtungen vorgesehen sein, die z. B. in dem besagten Spalt hintereinander angeordnet sind.

Im Ausführungsbeispiel der Fig. 2 sind die beiden äußeren Ringdichtungen 10, 12 in dem Spalt zwischen der Innenfläche der Überwurfmutter 6 und der Äußenfläche des Roheres 2 bzw. 3 angeordnet. Bei der äußeren Ringdichtung 10 liegt diese jedoch mit einem Teil ihres Querschnittes auch in axialer Richtung zwischen dem Innenflansch 7 und dem Aussenflansch 9. Es sind auch Ausführungsformen möglich, bei denen eine äußere Ringdichtung nur zwischen dem Innenflansch 7 und dem Aussenflansch 9 angeordnet ist. Im Falle des am Ende des Außengewindes 8 liegenden Endes der Überwurfmutter 6 kann ebenfalls eine solche Lösung vorgesehen sein, bei der eine äußere Ringdichtung beispielsweise zwischen der Stirnseite der Überwurfmutter 6 und einem auf dem zweitem Rohr 3 angeordneten Aussenflansch gelagert ist.

## Patentansprüche

1. Rohrkupplung (1) zur Schraubverbindung eines ersten mit einem zweiten Rohr (2, 3), mit einer mit einer inneren Ringdichtung (5) versehenen Stoßstelle (4) zwischen den Rohren (2, 3) und einer diese umgreifenden Überwurfmutter (6), die auf dem ersten Rohr (2) mit einem Innenflansch (7) in Axialanlage gegen einen Außenflansch (9) des Rohres (2) schiebbar gelagert und auf dem zweiten Rohr (3) mit einem Innengewinde auf einem Außengewinde (8) des Rohres (3) schraubbar ausgebildet ist, wobei in den beiden Ringspalten an den Enden der Überwurfmutter (6) zwischen dieser und dem jeweiligen Rohr (2, 3) bzw. einem an diesem vorgesehenen Flansch (9) je wenigstens eine äußere Ringdichtung (10, 12) angeordnet ist, **dadurch gekennzeichnet**, das die äußeren Ringdichtungen (10, 12) derart ausgebildet und angeordnet sind, dass sie bündig mit dem jeweilig äußeren Ende des Spaltes abschließen.

2. Rohrkupplung nach Anspruch 1, **dadurch gekennzeichnet, dass** die äußeren Ringdichtungen (10, 12) in Nuten (11, 13) der Rohre (2, 3) gegen axiale Verschiebungen gesichert sind.

## Claims

1. Threaded pipe coupling (1) for a screwed connection of a first pipe with a second pipe (2,3), with an abutting end provided with an internal ring seal (5) between the pipes (2,3) and a coupling nut (6) encompassing the pipes in a movable axial position on the first pipe (2) with an inner flange (7) against an external flange (9) of the pipe and configured in a screwable way on the secon pipe (3) with an internal thread on an external thread (8) on the pipe (3), whereby at least one external ring seal (10,12) is arranged in the two ring gaps at the end of the coupling nut (6) between this and the respective pipe (2, 3) and/or a flange (9) provided on this, **characterised in that** the external ring seals (10, 12) are configured and arranged in such a way that they are flush with the respective external end of the gap.

2. Threaded pipe coupling (1), **characterised in that** the external ring seals (10, 12) are secured in grooves (11, 13) of the pipes (2, 3) against axial shiftings.

## Revendications

1. Raccord (1) destiné à la liaison vissée d'un premier avec un deuxième tube (2, 3), comportant un point de transition (4) entre les tubes (2, 3) pourvu d'un joint annulaire intérieur (5) et un écrou-raccord (6), entourant ce point, qui est monté déplaçable sur le premier tube (2), qui par l'intermédiaire d'une bride intérieure (7) vient appuyer axialement contre une bride extérieure (9) du tube (2), et qui est susceptible d'être vissé sur le deuxième tube (3), par l'intermédiaire d'un filetage intérieur s'engageant dans un filetage extérieur (8) du tube (3), au moins un joint annulaire extérieur (10, 12) étant à chaque fois disposé dans les deux espaces annulaires présents aux extrémités de l'écrou-raccord (6), entre celui-ci et le tube (2, 3) correspondant, et/ou une bride (9) prévue sur celui-ci, **caractérisé en ce que** les joints annulaires extérieurs (10, 12) sont conçus et disposés de telle sorte qu'ils se trouvent en contact jointif avec l'extrémité extérieure respective de l'espace.

2. Raccord selon la revendication 1, **caractérisé en ce que** les joints annulaires extérieurs (10, 12) sont empêchés d'effectuer des déplacements axiaux en étant bloqués dans des rainures (11, 13) des tubes (2, 3).
